# EUROPEAN PATENT APPLICATION

(11) **EP 4 560 725 A1**
(43) Date of publication of application: **28.05.2025**
(21) Application number: 24213128.2
(22) Date of filing: 14.11.2024
(51) Int. Cl.: H01M 4/24, H01M 4/32, H01M 10/30

(54) **NICKEL-ZINC SECONDARY BATTERY**

(30) Priority: 22.11.2023 JP 2023198196
(71) Applicant: FDK Corporation, Tokyo 108-8212 (JP)
(72) Inventor: BANNO, Taketoshi, Tokyo, 108-8212 (JP); KAJIWARA, Takeshi, Tokyo, 108-8212 (JP); UNOKI, Shohei, Tokyo, 108-8212 (JP); MURASE, Satoshi, Tokyo, 108-8212 (JP); YAMAGUCHI, Tomomichi, Tokyo, 108-8212 (JP)
(74) Representative: Tiburzi, Andrea

(57) **Abstract**

A nickel-zinc secondary battery includes a positive electrode, a negative electrode, and an alkaline electrolyte. The positive electrode includes a particle that includes a nickel composite hydroxide as a positive electrode active material, and the particle including the nickel composite hydroxide has a half-value width of a peak in a (101) plane appearing at 2θ=35 to 45° in an X-ray diffraction measurement of less than 0.8°.

## Description

### Technical Field

The present invention relates to a nickel-zinc secondary battery.

### Background Art

A nickel-zinc secondary battery is known as a battery in which the hydrogen-absorbing alloy negative electrode of a nickel-hydrogen secondary battery is replaced with a negative electrode that includes zinc or a zinc compound. Zinc is a material which is rich in resources, inexpensive, and has a small environmental load. Further, the nickel-zinc secondary battery has merits such as a high open circuit voltage of 1.8 V, a high theoretical energy density, a high output, and the like.

Meanwhile, a nickel composite hydroxide such as nickel hydroxide is used as the positive electrode active material. For example, Patent Literature (hereinafter, referred to as PTL) 1 discloses a nickel-zinc secondary battery that uses particles that include a nickel composite hydroxide as a positive electrode active material.

The nickel composite hydroxide is also used as a positive electrode in a nickel-hydrogen secondary battery. In order to achieve an improvement in the utilization rate of nickel hydroxide, cycle characteristics, and the like in a nickel-hydrogen secondary battery, a method of solid-solubilizing various elements such as Zn, Mg, Co, and the like or a method of coating base particles including a nickel composite hydroxide with a coating layer including a cobalt compound has been studied.

For example, PTL 2 discloses a nickel hydroxide battery including, as a positive electrode active material, a nickel composite hydroxide powder in which 1.5 to 2.8% by mass of zinc is solid-solubilized, and the nickel composite hydroxide has a half-value width of a peak in a (101) plane in X-ray diffraction measurement of 0.85 to 1°. PTL 2 also discloses that setting the half-value width of the peak in the (101) plane to 0.85° or more can reduce the swell of the positive electrode active material while maintaining the filling capacity density of the nickel composite hydroxide.

In PTL 3, a nickel-hydrogen secondary battery including, as a positive electrode active material, nickel hydroxide having a half-value width of the peak in the (101) plane in X-ray diffraction measurement of 0.8° or more is disclosed. PTL 3 also discloses that, in particular, setting the half-value width of the peak in the (101) plane to 0.95° or more can increase the distortion of the crystal, thereby making the proton transfer between layers smooth, and further increasing the utilization rate of the positive electrode active material.

As described above, solid-solubilization of zinc into nickel hydroxide and the like are generally performed in a nickel-hydrogen secondary battery. However, when the solid solution amount of zinc becomes excessive, a decrease in capacity or the like is caused, and thus, the solid solution amount of zinc is generally less than 5% by mass with respect to nickel hydroxide. Further, the half-value width of the peak in the (101) plane is also generally increased to be larger than 0.8°.

### Citation List

### Patent Literature

PTL 1
   Japanese Patent Application Laid-Open No. 2023-144770
PTL 2
   Japanese Patent Application Laid-Open No. H5-290841
PTL 3
   Japanese Patent Application Laid-Open No. H10-177858

### Summary of Invention

### Technical Problem

The studies conducted by the present inventors, however, find that, in a nickel-zinc secondary battery, the capacity is significantly reduced by repeated charging and discharging when a nickel composite hydroxide as described above is used, and that the capacity maintenance rate after cycling is low.

An object of the present invention is to provide a nickel-zinc secondary battery in which the capacity maintenance rate after cycling is satisfactory.

### Solution to Problem

[1] A nickel-zinc secondary battery comprising: a positive electrode; a negative electrode; and an alkaline electrolyte, in which the positive electrode includes a particle that includes a nickel composite hydroxide, and the particle including the nickel composite hydroxide has a half-value width of a peak in a (101) plane that appears at 2θ=35 to 45° in an X-ray diffraction measurement of less than 0.8°.
[2] The nickel-zinc secondary battery according to [1], in which the particle includes, as the nickel composite hydroxide, nickel hydroxide in which at least zinc is solid-solubilized; and a solid solution amount of the zinc in the particle is 5 to 10% by mass with respect to the particle.
[3] The nickel-zinc secondary battery according to [1] or [2], in which the alkaline electrolyte includes a zinc ion, and a concentration of the zinc ion in the alkaline electrolyte is 4% by mass or more in terms of zinc oxide.
[4] The nickel-zinc secondary battery according to any one of [1] to [3], in which the particle includes a base particle that includes the nickel composite hydroxide, and a coating layer that covers a surface of the base particle and includes a cobalt compound doped with an alkali metal.

### Advantageous Effects of Invention

According to the present invention, it is possible to provide a nickel-zinc secondary battery in which the capacity maintenance rate after cycling is satisfactory.

### Brief Description of Drawings

FIG. 1 is a partially cutaway perspective view illustrating a nickel-zinc secondary battery according to an embodiment of the present invention; and
FIG. 2 is a graph illustrating X-ray diffraction measurement results of positive electrode active material particles A to E.

### Description of Embodiments

The present inventors have mainly focused and studied on the positive electrode active material for the cause of a low capacity maintenance rate after cycling of a nickel-zinc secondary battery.

In a nickel-zinc secondary battery, for example, zinc oxide or zinc hydroxide included in the negative electrode is eluted, and thus, a large amount of zinc ions are dissolved in the alkaline electrolyte. The present inventors have found that, by repeating a charge/discharge cycle in an electrolyte containing such a large amount of dissolved zinc ions, a capacity of a nickel composite hydroxide (which is a positive electrode active material) is reduced, and that the reduction of the capacity occurs due to intercalation (penetration) of zinc ions in the electrolyte between the layers of the nickel composite hydroxide (which is a layered compound).

Zinc ions that have penetrated between the layers of the nickel composite hydroxide not only cause the positive electrode active material to swell, but also inhibit the diffusion of protons (which is a normal charge/discharge reaction), and are thus presumed to reduce the capacity maintenance rate after the cycling.

For those problems, the present inventors have studied the relationship between the degree of crystallization of a nickel composite hydroxide, specifically the degree of distortion of the crystal, and the ease with which zinc ions in an electrolyte penetrate between layers of the nickel composite hydroxide.

The nickel composite hydroxide is a layered compound having a structure in which layers are stacked in a c-axis direction. The degree of distortion of the crystal of a nickel composite hydroxide is usually represented by the half-value width of an X-ray diffraction peak including c-axis information, and, for example, the half-value width of a peak in the

(001) plane or the (101) plane is used. The peak corresponding to the (001) plane includes only c-axis information, and thus, the half-value width thereof represents a periodicity disorder (for example, distribution of interlayer spacings or crystallite size). On the other hand, the peak in the (101) plane includes information on both the a-axis and the c-axis, and the half-value width thereof includes, in addition to a periodicity disorder, a distortion of the crystal structure due to twisting. That is, the (101) plane is considered to more accurately represent the distortion of the crystal than the (001) plane.

The present inventors have found that, by decreasing the half-value width of the peak in the (101) plane in the X-ray diffraction measurement of particles including a nickel composite hydroxide to less than 0.8°, that is, by decreasing the degree of distortion of a crystal and increasing the degree of crystallization, it is possible to make it difficult for zinc ions to penetrate between the layers of the nickel composite hydroxide, and thus, it is possible to suppress a decrease in the capacity maintenance rate after cycling.

Another method for suppressing the degradation of the nickel composite hydroxide caused by the penetration of zinc ions in the electrolyte between the layers of the nickel composite hydroxide (also referred to as "zinc poisoning") is possible such as decreasing the concentration of an alkali metal hydroxide in the electrolyte or adding an additive that forms a compound with the zinc ion, thereby decreasing the zinc ion concentration in the electrolyte. Such a method is more likely to lead to a decrease in the battery discharge capacity. In contrast, by using particles that include a nickel composite hydroxide which has a half-value width of the peak in the (101) plane of less than 0.8° as described above, the zinc poisoning of the nickel composite hydroxide can be suppressed even when the zinc ion concentration in the electrolyte is high. Thus, the decrease in the capacity maintenance rate after cycling rate due to zinc poisoning can be suppressed without decreasing the discharge capacity of the battery.

Hereinafter, a nickel-zinc secondary battery according to the present embodiment will be described. In the present specification, the term "to" or "-" represents a numerical range including the lower and upper limits, which are endpoints, unless otherwise specified.

### 1. Nickel-Zinc Secondary Battery

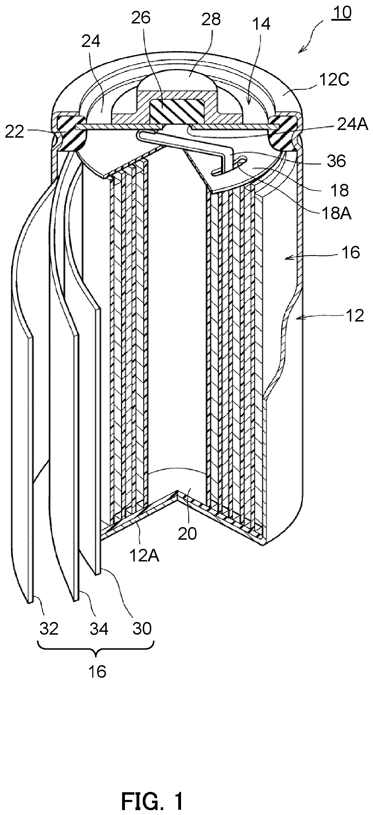

FIG. 1 is a partially cutaway perspective view of Nickel-zinc secondary battery 10 according to an embodiment of the present invention. FIG. 1 omits a part of illustrated wound body 16.

As illustrated in FIG. 1, nickel-zinc secondary battery 10 according to the present embodiment is, for example, a cylindrical battery of FA size, and includes outer can 12, sealing body 14, wound body 16 (electrode group), an electrolyte (not illustrated), upper insulation member 18, and lower insulation member 20.

Outer can 12 is a container that houses wound body 16, and, in the present embodiment, is a container having a bottom and a cylindrical shape with an open upper end. Outer can 12 is conductive, and bottom wall 12A thereof functions as a negative electrode terminal.

The material constituting outer can 12 may be a conductive material having corrosion resistance to an electrolyte or an electrochemical reaction inside of the battery, and usually includes a metal material such as iron or steel.

Sealing body 14 is fixed to the opening of outer can 12 via insulation packing 22, and seals outer can 12 while providing a positive electrode terminal. Sealing body 14 includes lid plate 24, valve body 26, and positive electrode terminal 28.

Lid plate 24 is a member having a disk shape and made of a conductive material, and includes through-hole 24A at the center. Insulation packing 22 has a ring shape surrounding lid plate 24, and is interposed between outer can 12 and sealing body 14. Insulation packing 22 is fixed to opening edge 12C of outer can 12 by crimping opening edge 12C of outer can 12. Thus, lid plate 24 and insulation packing 22 cooperate with each other to hermetically close the opening of outer can 12.

Valve body 26 is made of rubber, and is disposed on the outer surface of lid plate 24 to block through-hole 24A.

Positive electrode terminal 28 is a metal member having a cylindrical shape with a flange, and is electrically connected to the outer surface of lid plate 24 to cover valve body 26. Positive electrode terminal 28 presses valve body 26 toward lid plate 24. A gas vent hole (not illustrated) is opened to positive electrode terminal 28.

Further, in the normal operation, through-hole 24A is hermetically closed by valve body 26. When gas is generated within outer can 12 and the inner pressure thereof increases, on the other hand, valve body 26 is compressed by the inner pressure to open through-hole 24A, and as a result, gas is released to the outside from the inside of outer can 12 through through-hole 24A and a gas vent hole (not illustrated) of positive electrode terminal 28. That is, through-hole 24A, valve body 26, and positive electrode terminal 28 form a safety valve for a battery.

Wound body 16 includes positive electrode 30, negative electrode 32, and separator 34. That is, wound body 16 is an electrode group in which positive electrode 30 and negative electrode 32 are stacked with separator 34 interposed therebetween and wound. Specifically, wound body 16 is obtained by winding a laminate of separator 34, positive electrode 30, separator 34, and negative electrode 32 such that negative electrode 32 is on the outside.

Negative electrode 32 is disposed on the outermost peripheral surface of wound body 16, and negative electrode 32 is in contact with an inner wall surface of outer can 12. That is, negative electrode 32 and outer can 12, which is a negative electrode terminal, are electrically connected to each other.

Meanwhile, positive electrode lead 36 is connected to positive electrode 30 of wound body 16. One end of positive electrode lead 36 is connected to positive electrode 30, and the other end of positive electrode lead 36 is connected to lid plate 24. Thus, positive electrode 30 and positive electrode terminal 28 are electrically connected to each other via positive electrode lead 36 and lid plate 24.

Upper insulation member 18 is disposed between wound body 16 and lid plate 24. Thus, negative electrode 32 of wound body 16 does not contact sealing body 14. Further, upper insulation member 18 includes slit 18A, and positive electrode lead 36 passes through slit 18A.

Lower insulation member 20 is disposed between wound body 16 and the bottom of outer can 12. Thus, positive electrode 30 of wound body 16 does not contact the inner wall surface of outer can 12.

An alkaline electrolyte (not illustrated) is sealed in outer can 12. The alkaline electrolyte is an aqueous solution containing an alkali metal hydroxide. Examples of the alkali metal hydroxide include potassium hydroxide, sodium hydroxide, lithium hydroxide, and ammonium hydroxide. Among them, potassium hydroxide and lithium hydroxide are preferable. One type or a combination of two or more types of the alkali metal hydroxide may be used.

The concentration of the alkali metal hydroxide in the alkaline electrolyte is not limited, but is preferably 25 to 45% by mass. The higher the concentration of alkali metal hydroxide in the alkaline electrolyte, the higher the ionic conductivity, making it suitable for a high output density application. However, in such a case, elution of zinc oxide is more likely to occur at the negative electrode, which results in a capacity decrease due to zinc poisoning of the particles described above. On the other hand, the lower the concentration of alkali metal hydroxide in the alkaline electrolyte, the less zinc oxide dissolves from the negative electrode, making it suitable for a high capacity density application. However, in such a case, the ionic conductivity becomes low, and the output density is more likely to decrease. Further, the more the solid solution amount of zinc in particles including nickel hydroxide (in which zinc is solid-solubilized) increases, zinc poisoning can be more suppressed, but the proportion of nickel (which is an active material) decreases, and thus, the capacity density decreases. Accordingly, it is preferable to adjust the concentration of the alkali metal hydroxide in the alkaline electrolyte and/or the physical properties or the composition (for example, the half-value width of the peak in the (101) plane or the solid solution amount of zinc, or the like) of particles including a nickel composite hydroxide in the positive electrode according to the application of the battery.

For example, for a high capacity density application, it is preferable to combine an alkaline electrolyte including 25 to 35% by mass of an alkali metal hydroxide with particles including nickel hydroxide (in which 5 to 7% by mass of zinc is solid-solubilized) as a nickel composite hydroxide. In contrast, for a high output density application, it is preferable to combine an alkaline electrolyte including 35 to 45% by mass of an alkali metal hydroxide with particles including nickel hydroxide (in which 7 to 10% by mass of zinc is solid-solubilized) as a nickel composite hydroxide.

Further, a zinc compound such as zinc oxide or zinc hydroxide may be further dissolved in the alkaline electrolyte. The above dissolution is for the purpose of further suppressing the elution of zinc or zinc oxide into the electrolyte from the negative electrode. For example, the alkaline electrolyte preferably has zinc oxide dissolved to a saturation concentration. That is, the concentration of the zinc ion in the alkaline electrolyte is preferably 4% by mass or more in terms of zinc oxide. The concentration of zinc ion in the alkaline electrolyte can be measured by high-frequency induction-coupled plasma optical emission spectrometry (ICP-OES).

Further, in the nickel-zinc secondary battery, the generation and consumption of water occur during the charge/discharge reactions. Therefore, when the concentration of the alkali metal hydroxide in the electrolyte changes, the dissolution property of zinc oxide increases or decreases, promoting the penetration of zinc ions between the layers, which leads to the precipitation of zinc oxide to the positive electrode. Accordingly, the total amount of water in the alkaline electrolyte is preferably 1.5 to 2.5 g per 1 Ah of the battery capacity (nominal capacity). When the total amount of water in the alkaline electrolyte is 1.5 g or more, the concentration change of the alkali metal hydroxide in the electrolyte further decreases (the amount of water generated is 0.34 g or less with 1 Ah of charging), and thus, it is possible to further suppress the precipitation of the supersaturated zinc oxide to the positive electrode. When the total amount of water in the alkaline electrolyte is 2.5 g or less, on the other hand, the decrease in the capacity density of the battery can be made less since the proportion of the alkaline electrolyte in the battery is not too high. The total amount of water in the alkaline electrolyte can be calculated based on a mass change or the like when the battery is dismantled and heated or subjected to vacuum drying.

The decrease in the capacity maintenance rate after cycling due to the penetration of zinc ions between the layers of the nickel composite hydroxide is more likely to occur more significantly when a liquid/capacity ratio is high. This is because the amount of the electrolyte in contact with the nickel composite hydroxide is large. Even in such a case, the decrease in the capacity maintenance rate after cycling can be suppressed by using particles including the nickel composite hydroxide having a half-value width of the peak in the (101) plane of less than 0.8° as described above.

That is, when the amount of the electrolyte is M (ml), and the capacity is C (mAh), the liquid/capacity ratio M/C can be, for example, 1.5 to 2.5 ml/Ah. As described above, even when the liquid/capacity ratio M/C is relatively high, the decrease in the capacity maintenance rate after cycling due to zinc poisoning of the nickel composite hydroxide can be suppressed by using particles including the nickel composite hydroxide having a half-value width of the peak in the (101) plane of less than 0.8°.

In the following, each member constituting wound body 16 will be described.

### (1) Positive electrode

Positive electrode 30 includes a positive electrode current collector and a positive electrode mixture.

The positive electrode current collector may be, for example, a metal foil, a metal porous body that is mesh-shaped, sponge-shaped, fiber-shaped, or felt-shaped, or a punched metal, an expanded metal, or the like. The material of the positive electrode current collector may be a metal material that is stable even at the reaction potential of the positive electrode, for example, nickel or stainless steel, and is preferably nickel. That is, the positive electrode current collector may be foamed nickel or a mesh-shaped, sponge-shaped, fiber-shaped metal body made of nickel or subjected to nickel plating.

The positive electrode mixture is held by a positive electrode current collector and contains a positive electrode active material.

### (Positive electrode active material)

The positive electrode active material includes particles that contain a nickel composite hydroxide. The nickel composite hydroxide may be nickel hydroxide or may be nickel hydroxide in which one or more different metal elements other than nickel, such as zinc, cobalt, magnesium, manganese, cadmium, iron, aluminum, chromium, and yttrium, are solid-solubilized.

When particles comprising a nickel composite hydroxide are subjected to X-ray diffraction measurement, the half-value width of a peak in the (101) plane that appears at 2θ=35 to 45° is less than 0.8°. When the half-value width of the peak in the (101) plane is less than 0.8°, the nickel composite hydroxide has little crystal distortion and has a high degree of crystallization, and thus, it is possible to suppress zinc ions in the electrolyte from penetrating between the layers of the nickel composite hydroxide. Thus, it is possible to suppress the expansion of the positive electrode active material or to suppress the diffusion inhibition of protons (H⁺), thereby increasing the capacity maintenance rate after cycling. The lower limit of the half-value width of the peak in the (101) plane of particles including the nickel composite hydroxide is not limited, but is preferably, for example, 0.4° or more, more preferably 0.6° or more from the viewpoint of preventing the utilization rate of the positive electrode active material from being impaired.

Further, the half-value width of the peak in the (001) plane that appears at 2θ=15 to 30° when particles including the nickel composite hydroxide are subjected to X-ray diffraction measurement is preferably, for example, 0.7° or less. When the half-value width of the peak in the (001) plane is 0.7° or less, the crystal distortion of the nickel composite hydroxide is further reduced and the degree of crystallization becomes higher, and thus, it is possible to make it difficult for zinc ions in the electrolyte to penetrate between the layers of the nickel composite hydroxide. The lower limit of the half-value width of the peak in the (001) plane of particles including the nickel composite hydroxide may be, for example, 0.4° or more.

The X-ray diffraction measurement of particles including a nickel composite hydroxide can be performed under the following conditions.

The measurement apparatus may be, for example, a miniFlex600 (manufactured by Rigaku Corporation) that is an X-ray diffraction apparatus.

The measurement conditions are as follows.
X-ray: Cu-Kα-ray, 40 kV/15 mA
Scanning range: 5 to 70°
Step width: 0.01°
Scanning speed: 5°/min

The half-value width of the peaks in the (101) plane and the (001) plane can be calculated using integrated powder X-ray analysis software PDXL2 (manufactured by Rigaku Corporation).

The above-described measurement can be performed on particles including a nickel composite hydroxide as a raw material or particles obtained by the following procedure: a positive electrode obtained by dismantling a battery is washed with an ion-exchange water or the like and then dried to collect particles including a nickel composite hydroxide. It is preferable to remove foamed nickel pieces from the collected composite particles by, for example, sieving.

The half-value widths of the peaks in the (101) plane and the (001) plane of particles including a nickel composite hydroxide can be adjusted by the composition of the raw material for the particle and/or the preparation conditions of the particle to be described below (the pH of the reaction liquid at the time of the precipitation reaction, the reaction temperature). For example, during preparation of the particle, the lower the pH of the reaction solution during the precipitation reaction of the nickel composite hydroxide, the smaller the half-width of the peak in the (101) plane can be. Further, the higher the temperature of the reaction liquid, the smaller the half-value width of the peak in the (101) plane can be. Further, the half-value width of the peak in the (101) plane can be reduced as the solid solution amount of zinc in the nickel composite hydroxide increases. The method for adjusting the half-value width of the peak described above is not limited to these. Further, the methods described above can be performed alone or in any combination.

The particle preferably includes nickel hydroxide in which at least zinc is solid-solubilized as a nickel composite hydroxide. Further, the particle may include, as a nickel composite hydroxide, nickel hydroxide in which cobalt (Co) is solid-solubilized in addition to or instead of zinc. These zinc and cobalt are solid-solubilized by substituting some of nickel atomic sites of nickel hydroxide.

When zinc is solid-solubilized in the nickel composite hydroxide, the solid solution amount of zinc in the particles is preferably 4% by mass or more, more preferably 5% by mass or more, and still more preferably 5.1% by mass or more, with respect to the particles. When the solid solution amount of zinc is 4% by mass or more, it is possible to make it difficult for zinc ions in the electrolyte to penetrate between layers of the nickel composite hydroxide, which is a layered compound. Thus, it is possible to suppress the expansion of the positive electrode active material or to suppress the diffusion inhibition of protons (H⁺), thereby increasing the capacity maintenance rate after cycling. Although the upper limit of the solid solution amount of zinc is not limited, from the viewpoint of minimizing the decrease in the discharge capacity density accompanying the decrease in the filling capacity density of a nickel composite hydroxide, the solid solution amount of zinc with respect to the particle may be, for example, 10% by mass or less.

Further, when the above-described particles are composite particles to be described below, the amount of cobalt (Co) in the composite particle may be 2 to 5% by mass with respect to the composite particles.

The amounts of zinc and cobalt in the particles can be measured by high-frequency induction-coupled plasma optical emission spectrometry (ICP-OES) in the following procedure.
1) A plurality of standard solutions of which the concentration of a measurement element is known is prepared, and the photoluminescence intensity is measured using a high-frequency inductively coupled plasma optical emission spectrometer (ICP-OES apparatus) to create calibration curves.
2) Particle powder containing a nickel composite hydroxide is dissolved in nitric acid to prepare a sample solution. The photoluminescence intensity of this sample solution is measured using the apparatus described above.
3) By comparing the measurement result of the sample solution with the calibration curves, the amounts of zinc and cobalt in the particles including a nickel composite hydroxide can be identified. The amount of zinc to be measured is equivalent to the solid solution amount of zinc.

The above-described measurement can be performed, in the same manner as the X-ray diffraction measurement described above, on particles including a nickel composite hydroxide as a raw material or particles obtained by the following procedure: a positive electrode obtained by dismantling a battery is washed with an alkaline solution or the like and then dried to collect particles including a nickel composite hydroxide.

Further, the particle may be a composite particle including a base particle that contains a nickel composite hydroxide, and a coating layer that contains a cobalt compound doped with an alkali metal.

The coating layer is disposed to cover at least a part of the surface of the base particle. The coating layer preferably includes a cobalt compound doped with an alkali metal. Examples of the alkali metal include sodium (Na), lithium (Li), and the like. One type or two or more types of the alkali metal may be included. The cobalt compound is preferably a trivalent or higher-order cobalt compound such as cobalt oxyhydroxide (CoOOH). As described above, the higher-order cobalt compound in which an alkali metal is taken into the crystal has an extremely high conductivity.

The thickness of the coating layer is not limited, but can be, for example, 0.05 to 0.5 µm. When the thickness of the coating layer is 0.05 µm or more, the conductivity of the positive electrode active material can be increased and, in addition, zinc ions are less likely to penetrate between the layers of the nickel composite hydroxide due to the electrical action. Therefore, the utilization rate of the positive electrode active material and the capacity maintenance rate after cycling can be further increased. When the thickness of the coating layer is 0.5 µm or less, the decrease in the filling capacity density can be further suppressed.

The presence or absence of the coating layer and the thickness of the coating layer can be confirmed by preparing a cross-sectional sample of the composite particle using a cross-section polisher and observing the cross-section with a scanning electron microscope (SEM).

The average particle size of the particles including the nickel composite hydroxide is not limited, but is preferably, for example, 10 to 20 µm. That is, when the average particle size of the above particles is in the above-described range, the surface area of the particles further increases, and thus, the utilization rate of the positive electrode active material can be increased. The average particle size means the average particle size (median diameter) at which the cumulative value by mass is 50%. The average particle size of the particle can be measured with a particle size distribution measuring apparatus by a laser diffraction/scattering method.

### (Method for producing positive electrode active material)

The particles including the nickel composite hydroxide may be prepared by any method, and can be prepared, for example, by a reaction crystallization method. For example, the composite particles described above can be prepared by the following method.
1) First, a nickel sulfate-containing aqueous solution is prepared. An alkaline aqueous solution such as an aqueous sodium hydroxide solution is gradually added to the aqueous solution while controlling the pH, ammonium ion concentration, reaction temperature, and the like to cause a reaction, thereby precipitating base particles containing nickel composite hydroxide.
   When zinc and/or cobalt is/are further solid-solubilized in the nickel hydroxide, an aqueous solution containing nickel sulfate and zinc sulfate and/or cobalt sulfate is used as the above-described aqueous solution. Further, the pH and the reaction temperature at the precipitation reaction can be adjusted such that the half-value width of the peak in the (101) plane in the X-ray diffraction measurement of the finally obtained particles becomes the range described above.
2) The obtained base particles are added to an aqueous ammonia solution, and a cobalt sulfate aqueous solution is added to this aqueous solution. As a result, cobalt hydroxide is precipitated on the surface of the base particles as nuclei, and intermediate particles having a layer of cobalt hydroxide are obtained.

The obtained intermediate particles are circulated in air under a high-temperature environment, and are subjected to heating treatment (chemical oxidation) at a predetermined heating temperature for a predetermined heating time while being sprayed with an aqueous solution containing an alkali metal hydroxide, such as an aqueous sodium hydroxide solution or an aqueous lithium hydroxide solution. The heating treatment is preferably performed by holding the temperature at, for example, 80 to 100°C for 30 minutes to 2 hours. Through this treatment, the cobalt hydroxide on the surface of the intermediate particles is converted into a highly conductive cobalt compound (such as cobalt oxyhydroxide ), and an alkali metal such as sodium or lithium is taken into the crystals. Thus, a coating layer including a cobalt compound doped with an alkali metal is formed.

### (Additional components)

The positive electrode mixture may further contain a positive electrode additive and/or a binder as necessary.

Examples of the positive electrode additive include yttrium oxide; cobalt compounds such as cobalt oxide, cobalt metal, and cobalt hydroxide; zinc compounds such as metal zinc, zinc oxide, and zinc hydroxide; rare earth compounds such as erbium oxide; and niobium oxide. For example, a zinc compound such as zinc oxide or zinc hydroxide can be added for the purpose of suppressing positive electrode swell. The content of the zinc compound may be 0.1 to 5% by mass based on the total mass of the positive electrode active material.

The binder has a function of binding a positive electrode active material and a positive electrode additive to each other and of binding the positive electrode active material and the positive electrode additive to a positive electrode current collector. The binder may be a hydrophilic or hydrophobic polymer and examples thereof include hydroxypropyl cellulose, carboxymethyl cellulose (CMC), sodium polyacrylate, and fluorine-based polymers (such as polytetrafluoroethylene (PTFE) and polyvinylidene fluoride (PVdF)).

### (2) Negative electrode

Negative electrode 32 includes a negative electrode current collector and a negative electrode mixture.

The negative electrode current collector may be a non-perforated or perforated current collector. The non-perforated current collector may be a non-perforated foil. The perforated current collector may be, for example, a metal porous body that is mesh-shaped, sponge-shaped, fiber-shaped, or felt-shaped, or a punched metal or an expanded metal. The material of the negative electrode current collector may be a metal material that has conductivity and has a stable reaction potential for a negative electrode, and the example thereof include copper and copper alloys (for example, brass or the like), iron, and is preferably copper. That is, the negative electrode current collector is preferably made of copper foil.

The surface of the negative electrode current collector may be subjected to plating. The metal that constitutes the plating film is a metal having a hydrogen overvoltage higher than that of the metal that constitutes the main body of the negative electrode current collector, preferably a metal having a higher hydrogen overvoltage, more preferably a metal having a higher hydrogen overvoltage than copper, for example, tin.

The negative electrode mixture is held by a negative electrode current collector and includes a negative electrode active material. The negative electrode active material includes at least one of zinc, a zinc alloy, and a zinc-containing compound. Examples of metals constituting the zinc alloy include bismuth, aluminum, and indium, in addition to zinc. Examples of the zinc-containing compound include zinc oxide (grade 1/grade 2/grade 3), zinc hydroxide, zinc sulfide, tetrahydroxyzinc ion salt, zinc halide, zinc carboxylate compounds, including zinc acetate, zinc tartrate, and zinc oxalate, zinc magnesium, calcium zincate, barium zincate, zinc borate, zinc silicate, zinc aluminate, zinc fluoride, zinc carbonate, zinc hydrogen carbonate, zinc nitrate, and zinc sulfate. Among them, the negative electrode active material preferably contains zinc oxide as a main component. Containing a compound as a main component means that the compound is contained in an amount of, for example, 50% by mass or more based on the total mass of the negative electrode active material. Further, the negative electrode active material preferably further contains zinc (metal zinc). Zinc can serve as a discharge reserve and also a conductive material.

The negative electrode active material is, for example, in the form of a powder. The particle size of the negative electrode active material particles is not limited, but when a zinc or a zinc alloy is used, the average particle size is preferably 10 µm or more and 1000 µm or less, and when a zinc-containing compound is used, the average particle size is preferably 0.1 µm or more and 100 µm or less. The average particle size can be measured in the same manner as described above.

The negative electrode mixture may further include a negative electrode additive and/or a binder.

The negative electrode additive may be a component that, for example, reduces the elution of the negative electrode active material into the electrolyte. Examples of such a negative electrode additive include bismuth oxide, bismuth hydroxide, indium oxide, indium hydroxide, potassium oxalate, and hydrates thereof. For example, when potassium oxalate and/or a hydrate thereof is eluted into the electrolyte, the potassium oxalate and/or the hydrate thereof dissociates into oxalate ions. As a result, the zinc ion eluted in the electrolyte forms a poorly soluble salt with oxalate ions, and the poorly soluble salt covers the surface of the negative electrode active material, thereby reducing the contact between the metallic zinc of the negative electrode active material and the electrolyte solution.

The binder has a function of binding a negative electrode active material and a negative electrode additive to each other and further has a function of binding the negative electrode active material, the negative electrode additive, and the like to a negative electrode current collector. Examples of the binder include hydroxypropyl cellulose, carboxymethyl cellulose, polyvinyl alcohol, polyvinylpyrrolidone, polyacrylic acid, sodium polyacrylate, polyimide, polyamideimide, polyamide, styrene-butadiene rubber, polyethylene oxide, polytetrafluoroethylene, polyvinylidene fluoride, perfluoroalkoxyfluoroethylene resin, and copolymers of tetrafluoroethylene and hexafluoropropylene. Among them, a styrene-butadiene rubber is preferable from the viewpoints that the rubber has a high binding effect and an alkali resistance.

The content of the binder may be such that the negative electrode mixture can be sufficiently bound to the negative electrode current collector, for example, may be 1% by mass or more and 5% by mass or less mass based on the total amount of the negative electrode mixture, or may be preferably 1% by mass or more and 3% by mass or less.

### (3) Separator

As described above, separator 34 is disposed between positive electrode 30 and negative electrode 32 (see FIG. 1). Separator 34 may be a nonwoven fabric or a microporous film.

The material of the nonwoven fabric and the microporous film is not limited, and may be a polyolefin such as polyethylene or polypropylene, a polyester such as polyethylene terephthalate or polybutylene terephthalate, a polyphenylene sulfide, a polyamide, or the like. Among them, a polyolefin is preferable, and polypropylene is more preferable from the viewpoint of mechanical strength and shutdown characteristics.

The nonwoven fabric and the microporous film may each be provided with a hydrophilic functional group by hydrophilization treatment. For example, the nonwoven fabric or the microporous film may be a material provided with a sulfone group by a sulfonation treatment such as immersion in an acid containing a sulfategroup, such as sulfuric acid or a sulfonic acid. Thus, it is possible to further facilitate the alkaline electrolyte to wet a nonwoven fabric or a microporous film.

One type or a combination of two or more types of separator 34 may be used. For example, a laminate of a nonwoven fabric and a micro-porous film subjected to hydrophilic treatment may be used as separator 34.

### 2. Method for Manufacturing Nickel-Zinc Secondary Battery

The nickel-zinc secondary battery described above can be manufactured by any method. For example, the nickel-zinc secondary battery described above can be manufactured through the following steps: 1) preparing a positive electrode, a negative electrode, and a separator member, and 2) obtaining the nickel-zinc secondary battery by using the prepared positive electrode, negative electrode, and separator member.

### Step 1)

First, the positive electrode, the negative electrode, and the separator member are prepared.

Positive electrode 30 can be produced, for example, by the following procedure. First, a positive electrode active material, a conductive aid, a positive electrode additive, a binder, and water or a solvent are mixed and kneaded to obtain a positive electrode mixture slurry. Next, the obtained positive electrode mixture slurry is applied onto a positive electrode current collector, dried, and then rolled and cut into a predetermined size to obtain a positive electrode. Negative electrode 32 can be obtained in the same manner.

### Step 2)

Next, a nickel-zinc secondary battery is manufactured using the prepared positive electrode, negative electrode, and separator member.

Specifically, positive electrode 30 and negative electrode 32 prepared as described above are stacked with separator 34 (for example, a laminate of a nonwoven fabric and a microporous film) therebetween and wound to prepare a wound body. Positive electrode lead 36 is welded to one end of positive electrode 30 in the longitudinal direction of the positive electrode. For example, separator 34, positive electrode 30, separator 34, and negative electrode 32 are laminated in this order and wound along the longitudinal direction such that negative electrode 32 is on the outside, thereby obtaining wound body 16.

After storing obtained wound body 16 in outer can 12 and injecting the electrolyte into outer can 12, the opening portion of outer can 12 is sealed with sealing body 14.

After leaving the obtained battery for a predetermined time, activation processing is performed by charging the battery under the predetermined condition. The activation condition can be adjusted according to the characteristics of the electrode active materials (positive electrode active material and negative electrode active material). In the present embodiment, for example, the following cycle can be repeated five times: the battery is charged to its nominal capacity at a constant current-constant voltage of 1.9 V, and then discharged to 1.3 V Thus, it is possible to obtain nickel-zinc secondary battery 10.

### 3. Variation

In the above-described embodiments, the case where a cylindrical nickel-zinc secondary battery has been described as an example, but the present disclosure is not limited thereto, and the nickel-zinc secondary battery may be a square or laminate type.

### Examples

Hereinafter, the present invention will be described in more detail with reference to examples, but the present invention is not limited thereto.

### 1. Preparation of Positive Electrode Active Material Particles

### <Preparation of positive electrode active material particles A>

The positive active material particles A were prepared by a reaction crystallization method.

Specifically, an aqueous solution was prepared by mixing nickel sulfate, zinc sulfate, and cobalt sulfate, and ammonia ion was added to the aqueous solution to prepare an ammine complex. In addition, the pH, the reaction temperature, and the ammonium ion concentration were adjusted to predetermined conditions, and an aqueous sodium hydroxide solution was added to the mixture and the reaction was continuously performed, thereby gradually growing crystals. Thus, base particles of nickel hydroxide in which zinc and cobalt are solid-solubilized were obtained.

The obtained base particles were added to an aqueous ammonia solution, and a cobalt sulfate aqueous solution was added thereto while adjusting the pH, thereby causing cobalt hydroxide to be precipitated on the surface of the base particles. An aqueous solution of sodium hydroxide was sprayed onto the obtained particles in an oxygen-containing atmosphere, and heat treatment was performed to cause chemical oxidation, thereby converting the precipitated cobalt hydroxide into cobalt oxyhydroxide (a conductive cobalt compound).

Thus, positive electrode active material particles A were obtained, each including a coating layer containing cobalt oxyhydroxide having sodium introduced therein on the surface of the base particle.

### <Preparation of positive electrode active material particles B to E>

Positive electrode active material particles B to E were prepared in the same manner as positive electrode active material particles A, except that the amounts of nickel sulfate, zinc sulfate, and cobalt sulfate blended in the preparation of the base particles were adjusted, and the pH and reaction temperature when adding an aqueous sodium hydroxide solution to cause a precipitation reaction during the preparation of the base particles were adjusted so that the composition of the finally obtained positive electrode active material particles and the half-value width of the peak in the (101) plane were adjusted to the values shown in Table 1.

### <Measurement of physical properties>

### (Composition)

Composition analysis was performed by the quantification line method with high-frequency induction-coupled plasma optical emission spectrometry (ICP-OES).

Specifically, a plurality of standard solutions of which the concentration of a measurement element is known was prepared, and the photoluminescence intensity was measured using a high-frequency inductively coupled plasma optical emission spectrometer to create calibration curves.

Further, a positive electrode active material powder was dissolved in nitric acid to prepare a sample solution. The photoluminescence intensity of this sample solution is measured using the apparatus described above, and the solid solution amounts of each element were measured by comparing with the calibration curves.

### (Tapped bulk density)

The tapped bulk density was measured as the apparent density when a container is filled with the positive electrode active material particles and tapped to fill the gaps between the particles.

### (Average particle size)

The average particle size (median diameter) at which the cumulative value by mass is 50% was measured by a laser diffraction/scattering method using a particle size distribution measuring apparatus.

### (Specific surface area)

The specific surface area was measured by the BET method.

### (Half-value width)

X-ray diffraction measurement was performed on the obtained positive electrode active material particles. The measurement was performed using MiniFlex600 manufactured by Rigaku Corporation, and the half-value widths of the peak in the (101) plane that appears at 2θ=35 to 45° and the (001) plane peak that appears at 2θ=15 to 30° were calculated using integrated powder X-ray analysis software PDXL2 (manufactured by Rigaku Corporation). The measurement conditions are as follows.
X-ray: Cu-Kα-ray, 40 kV/15 mA
Scanning range: 5 to 70°
Step width: 0.01°
Scanning speed: 5°/min

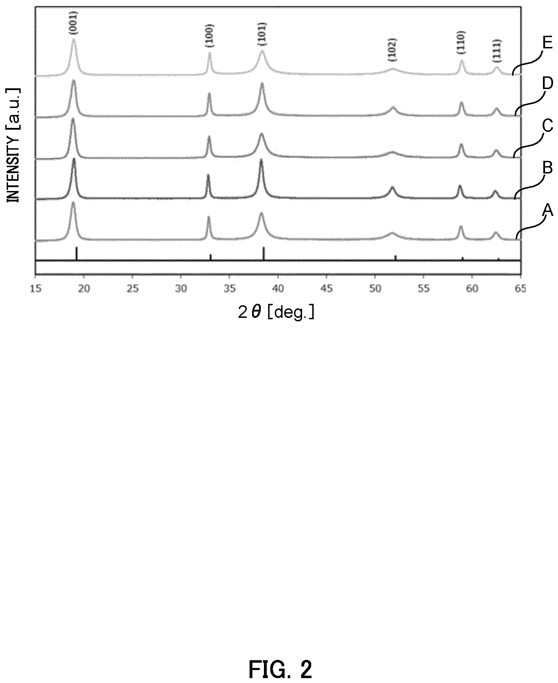

The compositions and properties of the positive electrode active material particles A to E prepared as described above are shown in Table 1. Further, a graph of the X-ray diffraction measurement results is illustrated in FIG. 2. FIG. 2 illustrates 2θ (deg.) on the horizontal axis and intensity (a.u.) on the vertical axis. FIG. 2 illustrates, from the bottom, X-ray diffraction peaks of positive electrode active materials A, B, C, D, and E.

**[Table 1]**

| | Positive electrode active material particle | | | | |
|---|---|---|---|---|---|
| | A | B | C | D | E |
| Ni [wt%] | 52.6 | 49.2 | 54.4 | 52.7 | 52.2 |
| Co [wt%]* | 3.12 | 3.3 | 3.21 | 4.73 | 4.72 |
| Zn [wt%] | 6.71 | 9.56 | 4.39 | 4.16 | 4.18 |
| H, Na, O, and other elements | Remaining amount | Remaining amount | Remaining amount | Remaining amount | Remaining amount |
| Tapped bulk density [g/cm³] | 2.17 | 2.00 | 2.32 | 2.12 | 2.11 |
| Average particle size (median) [µm] | 14.1 | 11.3 | 15.3 | 15.2 | 14.8 |
| Specific surface area (BET3 point method) [m²/g] | 16.2 | 18.6 | 10.8 | 123 | 12.6 |
| Half-value width of the (101) plane [deg] | 0.78 | 0.44 | 0.87 | 0.58 | 0.93 |
| Half-value width of the (001) plane [deg] | 0.61 | 0.49 | 0.57 | 0.62 | 0.69 |

| | | | | | |
|---|---|---|---|---|---|
| * Total amount of Co solid-solubilized in the nickel hydroxide in the base particle and included in the coating layer | | | | | |

### (Observation of positive electrode active material particle in cross section)

Cross-sectional samples were prepared from the obtained positive electrode active material particles using a cross-section polisher (CP), and observation of the particle cross-section was performed with a scanning electron microscope (SEM). It was confirmed that each obtained positive electrode active material particle has a surface of the base particle covered with the coating layer. The thickness of each coating layer was about 0.1 µm.

### 2. Preparation of Battery

### Example 1

### (Preparation of positive electrode)

A positive electrode mixture slurry was prepared by mixing 100 parts by mass of positive electrode active material powder composed of positive electrode active material particles A prepared as described above, 1 part by mass of zinc oxide powder, and predetermined amounts of a cobalt hydroxide powder, an yttrium oxide powder, a niobium oxide powder, a thickener, PTFE, and water.

Foamed nickel was filled with the obtained positive electrode mixture slurry, dried, pressure-bonded, and cut into a predetermined size. Thus, a positive electrode having a capacity per unit area of 13.4 mAh/cm² was produced.

### (Preparation of negative electrode)

A negative electrode mixture slurry was prepared by mixing 100 parts by mass of zinc oxide powder, 25 parts by mass of metal zinc powder, and predetermined amounts of bismuth oxide powder, potassium oxalate monohydrate, a thickener, water, and styrene-butadiene rubber.

The obtained negative electrode mixture slurry was applied to a copper non-perforated foil with a tin-plated surface. The electrode plate was dried, then subjected to rolling with a rolling roll, and cut into a predetermined size. Thus, a negative electrode having a capacity per unit area of 25 mAh/cm² was produced.

### (Preparation of Electrolyte)

An electrolyte was prepared by dissolving 4% by mass of zinc oxide in an aqueous solution containing 6 mol/L potassium hydroxide and 0.5 mol/L lithium hydroxide.

### (Preparation of battery)

The prepared positive electrode, the prepared negative electrode, and a separator group (in which a nonwoven fabric separator and a polypropylene microporous membrane subjected to hydrophilic treatment are integrated with each other) were wound together to obtain an electrode group. Specifically, a laminate including the separator group, the positive electrode, the separator group, and the negative electrode are stacked in this order was wound to obtain an electrode group in which negative electrode is disposed on the outermost peripheral surface. The electrode group was inserted into an outer can subjected to tin plating.

Then, an electrolyte prepared as described above was injected in an amount of 4.550 g, thereby producing a cylindrical nickel-zinc secondary battery having a nominal capacity of 2000 mAh. Two nickel-zinc secondary batteries were produced for analysis and for cycle characteristic evaluation.

### (Activation treatment)

The thus obtained battery was subjected to an activation treatment by repeating the following cycle five times: the battery was charged to its nominal capacity at a constant current-constant voltage of 1.9 V, and then discharged to 1.3 V

### [Example 2 and Comparative Examples 1 and 2]

Positive electrodes were produced in the same manner as in Example 1 except that positive electrode active material particles A were changed to the positive electrode active material particles indicated in Table 2, and batteries were then produced. The amount of electrolyte to be injected was set to 5.469 g in each of Example 2 and Comparative Example 2.

### 3. Evaluation

### (1) Cycle test

A cycle test was performed on the above batteries.

First, constant-current/constant-voltage (CCCV) charging was performed with a rate of 0.5C and an upper limit voltage of 1.9V over 24 hours. After a 15-minute pause, constant-current (CC) discharge was performed at 0.5 C until the voltage reached 1.3V, and the initial discharge capacity was determined.

Subsequently, after a 15-minute pause, constant-current (CC) charging at a rate of 1.0C was performed up to 1.95V, and after a 3-minute pause, constant-current constant-voltage (CCCV) charging was performed at a rate of 1.0C with the upper limit voltage of 1.9V and the end current of 0.2C. Subsequently, after a 15-minute pause, constant-current (CC) discharge was performed at 1,0C until the voltage reached 1.3V The above procedure was defined as one cycle. Charging and discharging were performed for 49 cycles under this condition.

Finally, constant-current constant-voltage (CCCV) charging was performed with the rate of 0.5C and the upper limit voltage of 1.9V over 24 hours. Subsequently, after a 15-minute pause, constant-current (CC) discharge was performed at 0.5C until the voltage reached 1.3 V.

These 50 cycles of charge and discharge were counted as one set, and four sets of charge and discharge (a total of 200 times) were performed.

Then, the capacity maintenance rate was calculated by applying the discharge capacity after 200 cycles (201st cycle) and the initial discharge capacity to the following equation. Capacity maintenance rate (%) = (Discharge capacity after 200 cycles / Initial discharge capacity) × 100

### (2) Utilization rate of positive electrode active material

The utilization rate was calculated from the discharge capacity in the first cycle based on the following equation. Utilization rate of the positive electrode active material (%) = (Initial discharge capacity / Theoretical capacity) × 100

The evaluation results of Example 1, Example 2, Comparative Example 1, and Comparative Example 2 are shown in Table 2.

**[Table 2]**

| | | Example 1 | Example 2 | Comparative Example 1 | Comparative Example 2 |
|---|---|---|---|---|---|
| Positive electrode active material particle | Type | A | D | C | E |
| | Half-value width in the (101) plane [deg] | 0.78 | 0.58 | 0.87 | 0.93 |
| Battery characteristics | Capacity maintenance rate after 200 cycles [%] | 97.7 | 93.5 | 89.4 | 83.0 |
| | Utilization rate of positive electrode active material [%] | 85.6 | 83.2 | 88.5 | 90.6 |

### (Capacity Maintenance Rate after Cycling)

As shown in Table 2, the capacity maintenance rates of the batteries of Comparative Examples 1 and 2 (with a positive electrode active material particle having a half-value width of the peak in the (101) plane of 0.8° or more) were lower than 90% after 200 cycles.

In contrast, it can be seen that the capacity maintenance rates of the batteries of Examples 1 and 2 (with a positive electrode active material having half-value width of the peak in the (101) plane of smaller than 0.8°) were equal to or larger than 90% after 200 cycles, which are extremely high. In particular, although the compositions of the positive electrode active material particles are substantially the same in Example 2 and Comparative Example 2, the crystallinities thereof are greatly different. From these comparison, it is understood that the penetration of zinc ions between the layers of nickel composite hydroxide can be suppressed by using a positive electrode active material with a small half-value width of a peak in the (101) plane and a high degree of crystallization.

From the foregoing, it is understood that the improvement in the capacity maintenance rate of a battery is effectively achieved by making the half-value width of the peak in the (101) plane small to be less than 0.8°.

In addition, it was found that the amount of reduction in the capacity maintenance rate after 200 cycles was larger in Example 2 and Comparative Example 2 (in which the injection amount was larger) than in Example 1 and Comparative Example 1 (in which the injection amount was smaller). Generally, when a cycle is repeated, the electrolyte is consumed and the resistance increases. For this reason, it has been said that the capacity maintenance rate increases when the amount of the electrolyte to be injected increases (high liquid/capacity ratio), but the above results indicate that the results are in fact the opposite. This is considered to be because the amount of electrolyte was large, and the positive electrode came into contact with a larger amount of electrolyte, resulting in an increase in the poisoned amount by zinc ions in the electrolyte, and thus a decrease in the capacity maintenance rate after cycling.

### Industrial Applicability

According to the present invention, it is possible to provide a nickel-zinc secondary battery in which the capacity maintenance rate after cycling is satisfactory.

### Reference Signs List

10 Nickel-zinc secondary battery
12 Outer can
12A Bottom wall
12C Opening edge
14 Sealing body
16 Wound body (electrode group)
18 Upper insulation member
20 Lower insulation member
22 Insulation packing
24 Lid plate
26 Valve body
28 Positive electrode terminal
30 Positive electrode
32 Negative electrode
34 Separator

## Claims

1. A nickel-zinc secondary battery comprising:
a positive electrode;
a negative electrode; and
an alkaline electrolyte, wherein
the positive electrode includes a particle that includes a nickel composite hydroxide, and
the particle including the nickel composite hydroxide has a half-value width of a peak in a (101) plane that appears at 2θ=35 to 45° in an X-ray diffraction measurement of less than 0.8°.

2. The nickel-zinc secondary battery according to claim 1, wherein:
the particle includes, as the nickel composite hydroxide, nickel hydroxide in which at least zinc is solid-solubilized; and
a solid solution amount of the zinc in the particle is 5 to 10% by mass with respect to the particle.

3. The nickel-zinc secondary battery according to claim 1 or 2, wherein:
the alkaline electrolyte includes a zinc ion, and
a concentration of the zinc ion in the alkaline electrolyte is 4% by mass or more in terms of zinc oxide.

4. The nickel-zinc secondary battery according to any one of claims 1 to 3, wherein
the particle includes
a base particle that includes the nickel composite hydroxide, and
a coating layer that covers a surface of the base particle and includes a cobalt compound doped with an alkali metal.
